# EUROPEAN PATENT SPECIFICATION

(11) **EP 3 462 065 B1**
(45) Date of publication and mention of the grant of the patent: **23.07.2025**
(21) Application number: 18192989.4
(22) Date of filing: 06.09.2018
(51) Int. Cl.: F16K 1/38, F16K 1/42, F16K 25/00

(54) **DISPENSING VALVE APPARATUS**
ABGABEVENTILVORRICHTUNG
APPAREIL DE SOUPAPE DE DISTRIBUTION

(30) Priority: 27.09.2017 JP 2017185770
(43) Date of publication of application: 03.04.2019
(73) Proprietor: Shin-Etsu Chemical Co., Ltd., Tokyo 100-0005 (JP)
(72) Inventor: Hamada, Yuichi, Gunma, 379-0195 (JP)
(74) Representative: Vossius & Partner Patentanwälte Rechtsanwälte mbB

(56) References cited:
- WO-A1-2013/134215
- WO-A1-2015/017523
- WO-A1-2017/004633
- JP-A- H11 268 060
- US-A- 5 934 520
- US-A1- 2004 074 994

## Description

### BACKGROUND

### Technical Field

The present invention relates to a dispensing valve apparatus for discharging liquid.

### Background Art

Dispensers for supplying liquid, such as water, oil, resin or the like, at a constant rate are used in various fields including semiconductor processes, medical fields and the like. Regarding semiconductor processes, many dispensers are used in an underfill process. Many dispensers are also used for the purpose of filling the interior of semiconductor device packages with resin. Further, regarding LED element manufacturing processes, dispensers are used in the process of applying to LED chips a fluorescent liquid obtained by mixing a fluorescent material and resin. In such dispensers, dispensing valve apparatuses are used as core apparatuses that dispense a constant amount of a solution to an accurate position in response to the supply of the solution (see, for example, JP2015-182043A). WO 2017/004633 A1 discloses a valve device comprising a closure device which has a needle which can be pressed against a seat for closing a valve opening of the valve device, wherein the needle and the seat are adapted to be yielding. US 2004/074994 A1 and US 5 934 520 A disclose at least implicitly a method according to the preamble of independent claim 1, respectively claim 2.

### SUMMARY OF THE INVENTION

### PROBLEMS TO BE SOLVED BY THE INVENTION

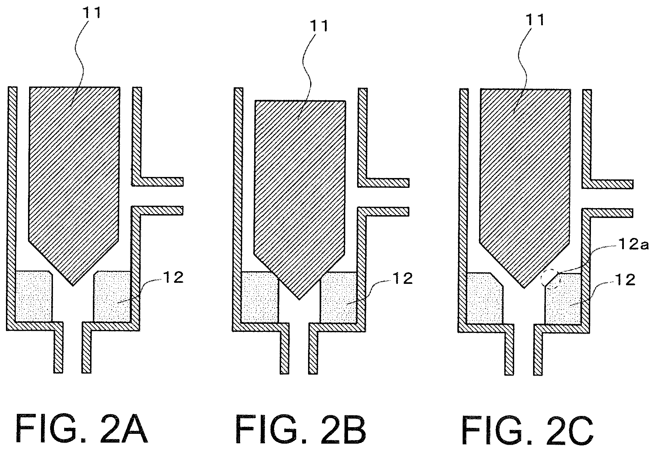

Even with fixed dispensing valve apparatuses that can dispense liquid at a constant rate with a high degree of accuracy, a larger amount of liquid than the set liquid amount tends to be dispensed when a dispensing is made after the valve apparatuses have been shut off for a period of time. It is considered that this is due to the fact that, when the dispensing valve apparatuses shut off the liquid, stainless-steel valve members are pressed against valve member seats with a relatively strong force so as to prevent the liquid from leaking, thus sections of the valve member seats that make contact with the valve members slightly deform elastically and get dented, and the liquid flow paths therefore become wider than the set liquid paths by the degree of the dent in the immediate subsequent dispensing. More specifically, in general, in the liquid dispensing condition, a flow path with a predetermined width is formed between a valve member seat 12 and a valve member 11 as shown in FIG. 2A, and in the shutting-off condition, the valve member 11 is kept pressed against the valve member seat 12 as shown in FIG. 2B. Then, in the condition immediately after the transition is made to the liquid dispensing condition following the shutting-off condition for a period of time, sections 12a of the valve member seat 12 that make contact with the valve member 11 deform elastically as shown in FIG. 2C. During the restitution time from the elastic deformation, the path flow has a wider width than the predetermined width and thus, a larger amount of liquid than the desired amount is dispensed.

When a high feed pressure is set by reducing the lifting amount of the valve member to narrow down the liquid flow path, the proportion of the deformation amount of the valve member seat with respect to the gate width of the liquid flow path becomes large, and thus the liquid amount fluctuation tends to be larger. On the other hand, when a low feed pressure is set by increasing the lifting amount of the valve member to widen the liquid flow path, the amount of valve member movement becomes large, and thus there is a higher risk of gas inclusion in the liquid flow path. Accordingly, a preliminary dispensing operation is necessary during the initial dispensing phase in order to perform precise dispensing. This, however, reduces the operability and the dispensed material is wasted.

The present invention has been made in view of the above-described problem, and an object thereof is to provide a dispensing valve apparatus with less fluctuation in the dispensing rate.

### MEANS FOR SOLVING THE PROBLEMS

As a consequence of the earnest investigations conducted by the present inventors, they found that the fluctuation in the dispensing rate, in particular during the initial dispensing phase such as when resuming the dispensing of the liquid, can be suppressed by using a material that is difficult to deform elastically for the valve member seat material such that the degree of deformation of the valve member seat against which the valve member is pressed is small.

The invention is defined by the claims.

### EFFECT OF THE INVENTION

According to the dispensing valve apparatus of the present invention, the fluctuation in liquid dispensing rate can be suppressed and a precise dispensing of liquid can be performed. In addition, a preliminary dispensing operation during the initial dispensing phase, which had conventionally been required for precise dispensing, is now unnecessary, and an improvement in the operability and saving of the dispensed material can therefore be achieved.

### BRIEF DESCRIPTION OF THE DRAWINGS

FIG. 1 is a schematic diagram of a dispensing valve apparatus.
FIGs. 2A to 2C are schematic diagrams illustrating the principle in the conventional dispensing valve apparatus, wherein the flow path is widened by the valve member seat being deformed by being pressed by the valve member, and thus the liquid amount increases.

### DETAILED DESCRIPTION OF THE EMBODIMENTS

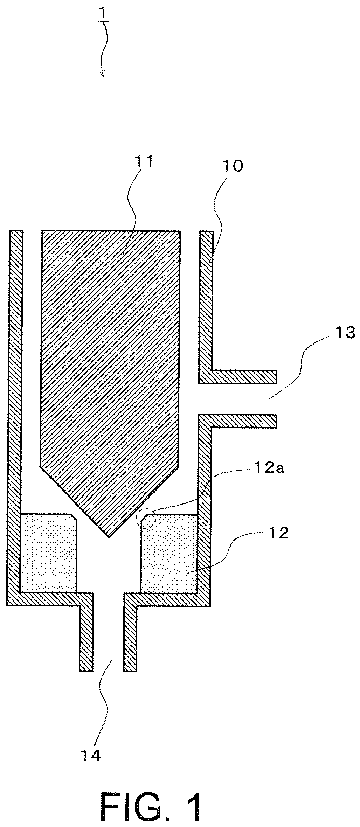

FIG. 1 is a schematic cross-sectional diagram showing the configuration of a dispensing valve apparatus 1 according to an embodiment of the present invention. More specifically, the dispensing valve apparatus 1 is provided with a valve member 11 and a valve member seat 12 in a valve body 10. The flow path of fluid between a supply port 13 and a dispensing port 14 is closed by the valve member 11 and valve member seat 12 making contact with each other. The dispensing valve apparatus 1 of the present embodiment is characterized in that a section 12a of the valve member seat 12 making contact with the valve member 11 is made of a material having a tensile elastic modulus of 2 GPa or greater.

In addition, the dispensing valve apparatus 1 is a dispensing valve apparatus that closes off the fluid by the valve member 11 and the valve member seat 12 making contact with each other and that is characterized in that the section 12a of the valve member seat 12 making contact with the valve member 11 is made of a material having a compressive elastic modulus of 2 GPa or greater.

The valve member 11 is preferably a needle valve member. Further, the dispensing valve apparatus 1 is preferably a fixed dispensing valve apparatus.

The material of the section 12a of the valve member seat 12 making contact with the valve member 11 has a tensile elastic modulus of 2 GPa or greater; such material is stainless-steel.

The tensile elastic modulus of the section 12a of the valve member seat 12 making contact with the valve member 11 is preferably 3 GPa or greater, more preferably, 4 GPa or greater, and even more preferably 100 GPa or greater. The tensile elastic modulus of the section 12a of the valve member seat 12 making contact with the valve member 11 is preferably higher since it will then be less deformable; however, it is preferable to use a material having a tensile elastic modulus that is equal to or less than the tensile elastic modulus of a section of the valve member 11 making contact with the valve member seat 12 so as to avoid damaging the valve member 11.

The valve member seat 12 may be made of a single material or a combination of a plurality of materials. For example, a material having a tensile elastic modulus of less than 2 GPa may be used for sections other than the section 12a of the valve member seat 12 making contact with the valve member 11.

It should be noted that the tensile elastic moduli of resin materials are specified in ASTM D651, and the tensile elastic moduli of metallic materials are specified in JIS Z 2280:1993. The tensile elastic moduli herein are values at a room temperature.

The material of the section 12a of the valve member seat 12 making contact with the valve member 11 has a compressive elastic modulus of 2 GPa or greater; such material is stainless-steel.

The compressive elastic modulus of the section 12a of the valve member seat 12 making contact with the valve member 11 is preferably 3 GPa or greater, more preferably 4 GPa or greater, and even more preferably 100 GPa or greater. The compressive elastic modulus of the section 12a of the valve member seat 12 making contact with the valve member 11 is preferably higher since it will then be less deformable; however, it is preferable to use a material having a compressive elastic modulus that is equal to or less than the compressive elastic modulus of a section of the valve member 11 making contact with the valve member seat 12 so as to avoid damaging the valve member 11.

The valve member seat 12 may be made of a single material or a combination of a plurality of materials. For example, a material having a compressive elastic modulus of less than 2 GPa may be used for sections other than the section 12a of the valve member seat 12 making contact with the valve member 11.

It should be noted that the compressive elastic moduli of resin materials are specified in ASTM D651. The compressive elastic moduli herein are values at a room temperature.

The section 12a of the valve member seat 12 making contact with the valve member 11 is preferably made of a material having a tensile elastic modulus of 2 GPa or greater and a compressive elastic modulus of 2 GPa or greater.

The valve member seat 12 is preferably formed in a ring-shape and arranged between the dispensing port 14 and the valve member 11. It should be noted that the centers of the valve member 11, valve member seat 12 and dispensing port 14 are preferably arranged in the same straight line.

### [Examples]

Hereinafter, the present invention will be described based on examples and a reference example; however, the present invention is not limited to such examples.

### <Example 1>

A ring-shaped valve member seat made of polypropylene (PP), against which a valve member (SUS304) was pressed, of a high precision liquid dispensing valve apparatus AV502 from Iwashita Engineering, Inc. was replaced with a valve member seat made of PEEK formed in the same shape (manufactured by VICTREX, with a tensile elastic modulus of 3.7 GPa and a compressive elastic modulus of 4.1 GPa).

Silicone resin was supplied through a liquid input port of the AV502 valve apparatus at a supplying pressure of 0.30 MPa. A vernier handle for adjustment located at the upper part of the AV502 valve apparatus was adjusted and the opening degree of the cylinder was set such that the liquid dispensing rate of a duration of 10 seconds was approximately 0.3 g.

One hour after closing the valve apparatus and shutting off the liquid, air for closing/opening the valve apparatus was supplied to the AV502 valve apparatus and the liquid was dispensed. When the liquid dispensing rate of the duration of 10 seconds was measured seven times at one minute intervals, the maximum liquid dispensing rate was 0.32 g and the minimum liquid dispensing rate was 0.27 g, and thus, the amount of fluctuation thereof was 0.05 g.

### <Example 2>

A ring-shaped valve member seat made of polypropylene (PP), against which a valve member (SUS304) was pressed, of a high precision liquid dispensing valve apparatus AV502 from Iwashita Engineering, Inc. was replaced with a valve member seat made of polyimide formed in the same shape (Vespel^{®} manufactured by DuPont, with a tensile elastic modulus of 3.2 GPa and a compressive elastic modulus of 2.4 GPa).

Silicone resin was supplied through a liquid input port of the AV502 valve apparatus at a supplying pressure of 0.30 MPa. A vernier handle for adjustment located at the upper part of the AV502 valve apparatus was adjusted and the opening degree of the cylinder was set such that the liquid dispensing rate of a duration of 10 seconds was approximately 0.3 g.

One hour after closing the valve apparatus and shutting off the liquid, air for closing/opening the valve apparatus was supplied to the AV502 valve apparatus and the liquid was dispensed. When the liquid dispensing rate of the duration of 10 seconds was measured seven times at one minute intervals, the maximum liquid dispensing rate was 0.33 g and the minimum liquid dispensing rate was 0.27 g, and thus, the amount of fluctuation thereof was 0.06 g.

### <Example 3>

A ring-shaped valve member seat made of polypropylene (PP), against which a valve member was pressed, of a high precision liquid dispensing valve apparatus AV502 from Iwashita Engineering, Inc. was replaced with a valve member seat made of stainless-steel formed in the same shape (SUS304, with a tensile elastic modulus of 193 GPa and a compressive elastic modulus of 170 GPa).

Silicone resin was supplied through a liquid input port of the AV502 valve apparatus at a supplying pressure of 0.30 MPa. A vernier handle for adjustment located at the upper part of the AV502 valve apparatus was adjusted and the opening degree of the cylinder was set such that the liquid dispensing rate of a duration of 10 seconds was approximately 0.3 g.

One hour after closing the valve apparatus and shutting off the liquid, air for closing/opening the valve apparatus was supplied to the AV502 valve apparatus and the liquid was dispensed. When the liquid dispensing rate of the duration of 10 seconds was measured seven times at one minute intervals, the maximum liquid dispensing rate was 0.31 g and the minimum liquid dispensing rate was 0.29 g, and thus, the amount of fluctuation thereof was 0.02 g.

### <Comparative Example 1>

A ring-shaped valve member seat made of polypropylene (PP) (with a tensile elastic modulus of 1.5 GPa and a compressive elastic modulus of 1.5 GPa), against which a valve member was pressed, of a high precision liquid dispensing valve apparatus AV502 from Iwashita Engineering, Inc. was used as is.

Silicone resin was supplied through a liquid input port of the AV502 valve apparatus at a supplying pressure of 0.30 MPa. A vernier handle for adjustment located at the upper part of the AV502 valve apparatus was adjusted and the opening degree of the cylinder was set such that the liquid dispensing rate of a duration of 10 seconds was approximately 0.3 g.

One hour after closing the valve apparatus and closing off the liquid, air for closing/opening the valve apparatus was supplied to the AV502 valve apparatus and the liquid was dispensed. When the liquid dispensing rate of the duration of 10 seconds was measured seven times at one minute intervals, the maximum liquid dispensing rate was 0.57 g and the minimum liquid dispensing rate was 0.26 g, and thus, the amount of fluctuation thereof was 0.31 g.

**[Table 1]**

| | Silicone solution dispensing rate of a duration of 10 seconds | | | | | | |
|---|---|---|---|---|---|---|---|
| | 1^{st} | 2^{nd} | 3^{rd} | 4^{th} | 5^{th} | 6^{th} | 7^{th} |
| Example 1 | 0.32 | 0.31 | 0.30 | 0.28 | 0.28 | 0.27 | 0.28 |
| Example 2 | 0.33 | 0.31 | 0.30 | 0.28 | 0.27 | 0.27 | 0.27 |
| Example 3 | 0.30 | 0.30 | 0.31 | 0.30 | 0.29 | 0.30 | 0.30 |
| Comparative Example 1 | 0.57 | 0.51 | 0.44 | 0.39 | 0.38 | 0.35 | 0.26 |

As shown in Table 1, as compared to Comparative Example 1, the fluctuation in the dispensing rate can be suppressed by using Examples 1 to 3 according to the present invention.

It should be noted that the present invention is not limited to the above-described embodiments. The above-described embodiments are illustrative, and any embodiments having substantially the same configuration as the technical idea described in the claims and achieving similar effects are encompassed within the technical scope of the present invention.

## Claims

1. A method of dispensing a liquid using a dispensing valve apparatus (1) that closes off a fluid by a stainless-steel valve member (11) and a valve member seat (12) making contact with each other, wherein a section (12a) of the valve member seat making contact with the valve member is made of a material having a tensile elastic modulus of 2 GPa or greater, the material configuring the section of the valve member seat making contact with the valve member is stainless-steel,
**characterized in that** the liquid is dispensed without a preliminary dispensing operation.

2. A method of dispensing a liquid using a dispensing valve apparatus (1) that closes off a fluid by a stainless-steel valve member (11) and a valve member seat (12) making contact with each other, wherein a section (12a) of the valve member seat making contact with the valve member is made of a material having a compressive elastic modulus of 2 GPa or greater, the material configuring the section of the valve member seat making contact with the valve member is stainless-steel, **characterized in that** the liquid is dispensed without a preliminary dispensing operation.

3. The method of dispensing a liquid using the dispensing valve apparatus (1) according to claim 1 or 2, **characterized in that** the valve member (11) is a needle valve member.

4. The method of dispensing a liquid using the dispensing valve apparatus (1) according to any one of claims 1 to 3,
**characterized in that** the dispensing valve apparatus (1) is a fixed dispensing valve apparatus.

5. The method of dispensing a liquid using a dispensing valve apparatus (1) according to any one of claims 1 to 4,
**characterized in that** the maximum liquid dispensing rate is 0.33 g and the minimum liquid dispensing rate is 0.27 g, when the liquid dispensing rate of a duration of 10 seconds is set to be 0.3 g.

## Patentansprüche

1. Verfahren zum Abgeben einer Flüssigkeit mit Hilfe einer Abgabeventilvorrichtung (1), die ein Fluid durch ein Edelstahl-Ventilteil (11) und einen Ventilteilsitz (12) absperrt, die Kontakt miteinander herstellen, wobei ein Teilstück (12a) des Kontakt mit dem Ventilteil herstellenden Ventilteilsitzes aus einem Material mit einem ZugE-Modul von mindestens 2 GPa hergestellt ist, wobei das Material, das das Teilstück des Kontakt mit dem Ventilteil herstellenden Ventilteilsitzes konfiguriert, Edelstahl ist,
**dadurch gekennzeichnet, dass** die Flüssigkeit ohne einen vorbereitenden Abgabevorgang abgegeben wird.

2. Verfahren zum Abgeben einer Flüssigkeit mit Hilfe einer Abgabeventilvorrichtung (1), die ein Fluid durch ein Edelstahl-Ventilteil (11) und einen Ventilteilsitz (12) absperrt, die Kontakt miteinander herstellen, wobei ein Teilstück (12a) des Kontakt mit dem Ventilteil herstellenden Ventilteilsitzes aus einem Material mit einem Druck-E-Modul von mindestens 2 GPa hergestellt ist, wobei das Material, das das Teilstück des Kontakt mit dem Ventilteil herstellenden Ventilteilsitzes konfiguriert, Edelstahl ist,
**dadurch gekennzeichnet, dass** die Flüssigkeit ohne einen vorbereitenden Abgabevorgang abgegeben wird.

3. Verfahren zum Abgeben einer Flüssigkeit mit Hilfe der Abgabeventilvorrichtung (1) nach Anspruch 1 oder 2,
**dadurch gekennzeichnet, dass** das Ventilteil (11) ein Nadelventilteil ist.

4. Verfahren zum Abgeben einer Flüssigkeit mit Hilfe der Abgabeventilvorrichtung (1) nach einem der Ansprüche 1 bis 3,
**dadurch gekennzeichnet, dass** die Abgabeventilvorrichtung (1) eine feste Abgabeventilvorrichtung ist.

5. Verfahren zum Abgeben einer Flüssigkeit mit Hilfe einer Abgabeventilvorrichtung (1) nach einem der Ansprüche 1 bis 4,
**dadurch gekennzeichnet, dass** die maximale Flüssigkeitsabgaberate 0,33 g beträgt und die minimale Flüssigkeitsabgaberate 0,27 g beträgt, wenn die Flüssigkeitsabgaberate einer Dauer von 10 Sekunden auf 0,3 g eingestellt ist.

## Revendications

1. Procédé de distribution d'un liquide à l'aide d'un appareil à valve de distribution (1) qui ferme le passage d'un fluide par un élément de valve (11) en acier inoxydable et un siège d'élément de valve (12) en contact l'un avec l'autre, dans lequel une section (12a) du siège d'élément de valve en contact avec l'élément de valve est constituée d'un matériau ayant un module d'élasticité en traction de 2 GPa ou plus, le matériau configurant la section du siège d'élément de valve en contact avec l'élément de valve est l'acier inoxydable, **caractérisé en ce que** le liquide est distribué sans opération de distribution préalable.

2. Procédé de distribution d'un liquide à l'aide d'un appareil à valve de distribution (1) qui ferme le passage d'un fluide par un élément de valve (11) en acier inoxydable et un siège d'élément de valve (12) en contact l'un avec l'autre, dans lequel une section (12a) du siège d'élément de valve en contact avec l'élément de valve est constituée d'un matériau ayant un module d'élasticité en compression de 2 GPa ou plus, le matériau configurant la section du siège d'élément de valve en contact avec l'élément de valve est l'acier inoxydable, **caractérisé en ce que** le liquide est distribué sans opération de distribution préalable.

3. Procédé de distribution d'un liquide à l'aide de l'appareil à valve de distribution (1) selon la revendication 1 ou 2, **caractérisé en ce que** l'élément de valve (11) est un élément de valve à pointeau.

4. Procédé de distribution d'un liquide à l'aide de l'appareil à valve de distribution (1) selon l'une quelconque des revendications 1 à 3, **caractérisé en ce que** l'appareil à valve de distribution (1) est un appareil à valve de distribution fixe.

5. Procédé de distribution d'un liquide à l'aide d'un appareil à valve de distribution (1) selon l'une quelconque des revendications 1 à 4, **caractérisé en ce que** le débit de distribution de liquide maximal est de 0,33 g et le débit de distribution de liquide minimal est de 0,27 g, lorsque le débit de distribution de liquide d'une durée de 10 secondes est fixé pour être de 0,3 g.
